(19) Europäisches Patentamt / European Patent Office / Office européen des brevets

(11) **EP 2 824 355 A1**

(12) **EUROPEAN PATENT APPLICATION**

(43) Date of publication:
**14.01.2015 Bulletin 2015/03**

(51) Int Cl.:
***F16F 3/12*** *(2006.01)*

(21) Application number: **13175815.3**

(22) Date of filing: **09.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Kone Corporation**
**00330 Helsinki (FI)**

(72) Inventors:
• **SIMBIEROWICZ, Gabriela**
  **05830 Hyvinkää (FI)**

• **SAARELAINEN, Antti**
  **02650 Espoo (FI)**
• **IHALAINEN, Panu**
  **12400 Tervakoski (FI)**

(74) Representative: **K & H Bonapat**
**Patentanwälte**
**Eduard-Schmid-Strasse 2**
**81541 München (DE)**

(54) **Coated springs used as special solution for avoiding resonances**

(57)     Damping element, for the reduction of resonances in machinery assemblies, comprising at least one spring-element that is coated with at least one layer of coating, wherein the resultant spring constant k(spring) of all spring-elements of the damping element is greater than the spring constant k(coating) of the complete coating, and the resultant damping ratio c(spring) of all spring elements of the damping element is smaller than the resultant damping ratio c(coating) of the complete coating.

FIG. 1

EP 2 824 355 A1

## Description

The invention pertains to damping elements for the reduction of resonances in machinery assemblies.

In every machinery comprising moving parts inevitable resonances do occur during normal operation. Especially moving parts comprising imbalances, or if the movement is affected by rolling or sliding means, the respective parts are subject to disturbing resonances that negatively affect the operation of the machinery.

Especially in the technical field of hoisting machineries, the resonances of the machinery parts of the same mechanical structure are influenced by a large range of loads, leads, roping options and operation speeds.

In order to avoid resonances at nominal speeds, the entire structure of the motor or the whole machinery assembly could be calculated beforehand. However in most cases the general solution is not offering enough accuracy. For example for a hoisting machine, the resonance-frequencies depend on the speed of the car, the actual load, the length of the roping and the movement in the interior of the car. The exact calculation of the influence of all these items to the resonance-frequency or resonance-frequencies is nearly not possible. Regarding a real hoisting machine, the resonance frequencies of a part of the machine assembly inevitably shifts if external influences change or if the car actually moves. Thus, if one resonance frequency is excluded by a computed layout, other resonance frequencies may appear in the operation of the real machinery.

Also springs and rubber dampers are used to reduce resonances of machinery parts. However, often these solutions are not offering enough resonance-suppressing effect or show a performance-reduction after a certain time period.

The object of the invention is to overcome these disadvantages and to provide damping elements optimizing a machinery assembly in regard to the reduction of resonances during operation.

This object is accomplished according to the present invention by the use of damping elements as disclosed in the claims.

A damping element according to the present invention comprises at least one spring-element that is coated with at least one coating-layer (coated spring).

Every body made of a material has a certain spring constant k, at least while used in the normal regions of force. Normally, this spring constant results from *Hookes Law* based on a proportionality between external force F and change of length $\Delta L$. In regard of certain materials, there could be bodies where the relation between F and $\Delta L$ is not exactly proportional. However, a spring constant k could also be assigned to these bodies. This spring constant then is an average value of all sub-spring constants dk over the interval of force that may be applied to this body while used normally. The term 'normally' means that the force that is applied lies between 0 and a force that would lead to the destruction of the body or at least to regions where the deformation of the body is irreversible. The skilled person knows, which material is suitable for which force.

In the following, the spring constant of a spring k(spring) is either well known from the technical papers of the spring or may easily be calculated. The 'whole interval of force' is the region of force between 0 and the maximal admissible force for the certain spring.

The spring constant of the coating k(coating) is either well known from the technical papers or may easily be calculated. If an average has to be calculated, this average is calculate for the whole interval of force, or preferably between 10% and 90%, especially between 30 and 70%, of the whole interval of force.

The advantageous effect of the present invention lies in the special combination of spring and coating. By using only springs as damping elements, the natural frequencies of the respective parts of the machinery assembly can be shifted, but no or low actual damping of the vibrations is induced in the machinery system. In case of forced vibrations this is a major drawback.

On the other hand, by using only dampers, the aging of the material and the damping dependency on speed and temperature are affecting the performance of the machinery system. In case of a motor, the selection of rubber or polyurethane resistant at the normal temperature of the active motor is limited.

The coated springs combine the advantages of springs, shifting resonances and enduring high temperatures and many cycles of deformation, and the advantages of rubber, namely the good damping effect. Thus, the invention combines the advantage of shifting frequencies with the advantage of diminishing the amplitudes of forced vibrations. The coating material characteristics are delaying and decreasing the response of the springs.

The coating of the actual spring-elements differs from coatings preventing corrosion. Here, the coating applies a measurable damping effect to the movement of the spring-elements.

To achieve this, it is an essential feature of the invention, that the resultant spring constant k(spring) of all spring-elements of the damping element is greater than the spring constant k(coating) of the complete coating, particularly more than 100 times greater, preferably more than 1000 times greater, especially more than 10000 times greater. This has the advantage that the spring elements bear most of the deformation energy.

In addition, the resultant damping ratio (or 'damping factor') c(spring) of all spring elements of the damping element is smaller than the resultant damping ratio c(coating) of the complete coating, particularly more than 100 times smaller, preferably more than 10000 times smaller.

Since damping is often given in dB, it could also be said that the damping of the spring is smaller than 4 dB, preferably smaller than 10 dB, especially smaller than 20 dB. This has the advantage that the coating is able to effectively damp the movement of the spring-elements.

Especially in regard of oscillations due to external forces, most of the deforming energy goes into the deformation of the spring elements and the coating is not worn out due to these deformations, while the coating is able to damp the movements of the spring elements resulting in the damping of the oscillations without overstraining the material of the coating.

Preferred spring-elements are elements selected from the group compression springs, torsion springs, tension springs, wire shaped springs, flat section springs and disk-compressing-springs.

Preferred spring shapes are selected from the group comprising helical springs (coil springs), balance springs, leaf springs, V-springs, Belleville springs, spring washers, torsion springs and wave springs.

In a preferred embodiment, the spring shape is lamellar (e.g. disk-compressing-springs). This shape is advantageous to be used in a limited space. These springs could fit into flat parts of a machinery, for example the machinery of a hoisting system like an elevator.

Although metal is especially preferred as material for the spring, the spring may also comprise or consist of plastic material and/or fiber-material. In a preferred embodiment the spring-element consists of or comprises spring steel.

The coating preferably comprises elastic materials and is applied on the surface of at least one of the spring elements, especially all of the spring elements of the damping element.

The respective spring elements may be coated on one side, two or more adjacent or opposite sides or all sides, where a complete coating on all sides of the respective spring elements is preferred.

The material damping factor c, could preferably be computed by using the Rayleigh-equation that combines the damp lower mass dependent and higher stiffness dependent frequency range behavior

$$c = \frac{\alpha}{2\omega} + \frac{\beta}{2}\omega \quad ,$$

where

$\alpha$ is the mass proportional Rayleigh damping coefficient,
$\beta$ is the stiffness proportional Rayleigh damping coefficient and
$\omega_n$ is the Eigen angular frequency.

In a preferred embodiment, the coating comprises or is made of an elastic material with the mass proportional Rayleigh damping coefficient $\alpha$ lying between 6 $s^{-1}$ and 16 $s^{-1}$, preferably between 10 $s^{-1}$ and 12 $s^{-1}$, and/or the stiffness proportional Rayleigh damping coefficient of the coating $\beta$ lying between 0.0001 $s^{-1}$ and 0.0004 $s^{-1}$, preferably between 0.0002 $s^{-1}$ and 0.0003 $s^{-1}$. Preferred materials are materials are elastomers, especially comprising elements of the group natural Polyisoprene, synthetic Polyisoprene, Polybutadiene, Chloroprene rubber, Butyl rubber, Styrene-butadiene rubber, Nitrile rubber, Ethylene Propylene rubber, Epichlorohydrin rubber, Polyacrylic rubber, Silicone rubber, Fluorosilicone rubber, Fluoroelastomers, Perfluoroelastomers, Polyether Block Amides, Chlorosulfonated Polyethylene, and Ethylene-vinyl Acetate. Commonly, the coating comprises rubber.

It may happen that one of the above materials, e.g. rubbers have nonlinear behaviors regarding stiffness and damping. This means that stiffness and damping may vary with frequency, load or temperature.

However, the Rayleigh formulation is suitable for these materials and the above mentioned damping factor can be used to compare the material with the damping factor of the spring.

Regarding the influence of the temperature in the non-linear case, it is especially set to room temperature or the temperature of the respective part of the machine assembly. In general, it is preferred to make the above mentioned comparison of the spring constants and the damping factors at temperatures or temperature-ranges of the chosen environment of the damping element. The essential comparison of the values (greater/smaller, 100 times, 10000 times) should be valid in regard to this temperature or temperature-ranges.

Regarding the influence of the oscillation-frequency in the non-linear case, it is especially set to the region of 1 Hz to 100 Hz in the case of movement of a car of a lift or from 20Hz to 20kHz for vibro-acoustics. In general, it is preferred to make the above mentioned comparison of the spring constants and the damping factors at frequencies or frequency-ranges of the chosen environment of the damping element. The essential comparison of the values (greater/smaller, 100 times, 10000 times) should be valid in regard to this frequency or frequency-ranges.

The same is especially valid for loads.

According to the present invention, at least one damping element is used as damping element in a machinery assembly.

In a preferred embodiment, at least one coated spring is arranged in at least one certain critical area in the machinery.

Regarding a motor assembly at least one coated spring is especially arranged between the stator and the frame and/or between the motor and the lower bedplate and/or between the motor and any other supporting/mounting structure. Regarding the case of an inside area of the elevator, at least one coated spring is especially arranged between the car and sling on the bottom and/or on the top interface. The present invention can be implemented e.g. in hoisting machines comprising motors with resonances for a certain speed, roping and load in car.

Examples of preferred embodiments of the invention are shown in the figures and described in the following.

- Figure 1 shows a perspective example of a damping element comprising a helical spring element.

- Figure 2 shows an example of a damping element comprising a lamellar spring element in side view.

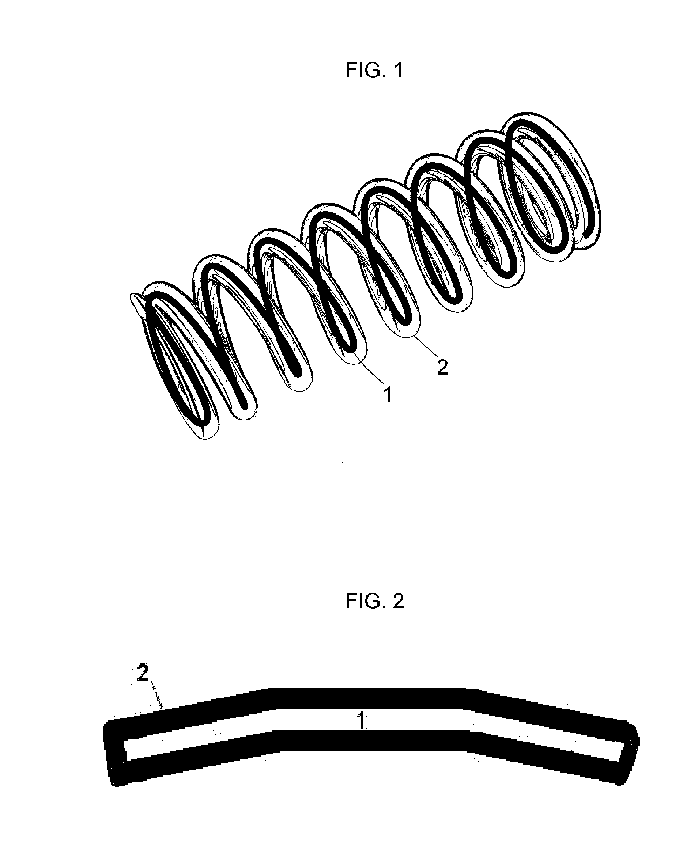

In Figure 1, a preferred damping element comprising a helical spring element 1 that is coated with a coating material 2. The spring forms the core of the damping element and the coating is arranged around the spring element.

Figure 2 shows an intersection of a preferred damping element comprising a lamellar spring element 1 that is coated with a coating material 2. This element can be used to damp machinery parts providing only small room for damping elements.

**Claims**

1. Damping element, for the reduction of resonances in machinery assemblies, comprising at least one spring-element that is coated with at least one layer of coating, **characterized in that**, the resultant spring constant k(spring) of all spring-elements of the damping element is greater than the spring constant k(coating) of the complete coating, and the resultant damping ratio c(spring) of all spring elements of the damping element is smaller than the resultant damping ratio c(coating) of the complete coating.

2. Damping element as claimed in claim 1, **characterized in that**, the resultant spring constant k(spring) of all spring-elements of the damping element is greater than 100 times, preferably more than 1000 times greater, than the spring constant k(coating) of the complete coating.

3. Damping element as claimed in claim 1 or 2, **characterized in that**, the resultant damping ratio c(spring) of all spring elements of the damping element is more than 100 times smaller, preferably more than 10000 times smaller, than the resultant damping ratio c(coating) of the coating.

4. Damping element as claimed in one of claims 1 to 3, **characterized in that**, at least one of the spring-elements is selected from the group comprising compression springs, torsion springs, tension springs, wire shaped springs, flat section springs and disk-compressing-springs, and/or its spring shape is selected from the group comprising helical springs, balance springs, leaf springs, V-springs, Belleville springs, spring washers, torsion springs and wave springs.

5. Damping element as claimed in one of claims 1 to 4, **characterized in that**, the spring comprises or consists of metal, especially spring steel, and/or plastic material and/or fiber-material.

6. Damping element as claimed in one of claims 1 to 5, **characterized in that**, the coating comprises or is made of an elastic material with the mass proportional Rayleigh damping coefficient $\alpha$ lying between 6 s$^{-1}$ and 16 s$^{-1}$, preferably between 10 s$^{-1}$ and 12 s$^{-1}$, and/or the stiffness proportional Rayleigh damping coefficient of the coating $\alpha$ lying between 0.0001 s$^{-1}$ and 0.0004 s$^{-1}$, preferably between 0.0002 s$^{-1}$ and 0.0003 s$^{-1}$.

7. Damping element as claimed in one of claims 1 to 6, **characterized in that** the material of the coating comprises at least one elastomer-material, especially comprising elements of the group Natural Polyisoprene, Synthetic Polyisoprene, Polybutadiene, Chloroprene rubber, Butyl rubber, Styrene-Butadiene rubber, Nitrile rubber, Ethylene Propylene rubber, Epichlorohydrin rubber, Polyacrylic rubber, Silicone rubber, Fluorosilicone rubber, Fluoroelastomers, Perfluoroelastomers, Polyether block amides, Chlorosulfonated Polyethylene, and Ethylene-vinyl Acetate.

8. Use of at least one damping element as claimed in the above claims as damping element in a machinery assembly.

9. Use as claimed in claim 8, wherein at least one coated spring is arranged in at least one certain critical area in the machinery, preferably between the stator and the frame of a motor and/or between the motor and the lower bedplate and/or between the motor and any other supporting or mounting structure, or preferably, in the case of an in the elevator, between the car and sling on the bottom and/or on the top interface.

10. Machine assembly, **characterized in that**, it comprises at least one damping element as claimed in the above claims 1 to 7.

FIG. 1

FIG. 2

Europäisches
Patentamt

European
Patent Office

Office européen
des brevets

**EUROPEAN SEARCH REPORT**

Application Number

EP 13 17 5815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 78 09 523 U1 (LICENTIA) 15 July 1982 (1982-07-15) * the whole document * | 1-10 | INV. F16F3/12 F16F1/024 |
| X | US 4 753 423 A (UKAI KENJI [JP] ET AL) 28 June 1988 (1988-06-28) | 1 | |
| A | * column 2, line 37 - column 4, line 55; figures 1-3 * | 2-10 | |
| X | JP S53 95456 A (MATSUSHITA ELECTRIC IND CO LTD) 21 August 1978 (1978-08-21) | 1 | |
| A | * abstract * | 2-10 | |
| A | US 4 763 882 A (NISHIYAMA MASAKAZU [JP] ET AL) 16 August 1988 (1988-08-16) * column 1, line 50 - column 2, line 7; figure 1 * | 1-10 | |
| A | US 2002/190453 A1 (WILHELM GRANT A [US] ET AL) 19 December 2002 (2002-12-19) * the whole document * | 1-10 | |

TECHNICAL FIELDS
SEARCHED        (IPC)

F16F

The present search report has been drawn up for all claims

| Place of search | Date of completion of the search | Examiner |
|---|---|---|
| The Hague | 28 February 2014 | Christensen, Claus |

EPO FORM 1503 03.82 (P04C01)

## ANNEX TO THE EUROPEAN SEARCH REPORT
## ON EUROPEAN PATENT APPLICATION NO.

EP 13 17 5815

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2014

| Patent document cited in search report | | Publication date | Patent family member(s) | | Publication date |
|---|---|---|---|---|---|
| DE 7809523 | U1 | 15-07-1982 | DE | 2813819 A1 | 04-10-1979 |
| | | | DE | 7809523 U1 | 15-07-1982 |
| US 4753423 | A | 28-06-1988 | NONE | | |
| JP S5395456 | A | 21-08-1978 | NONE | | |
| US 4763882 | A | 16-08-1988 | DE | 3517900 A1 | 21-11-1985 |
| | | | JP | S60245843 A | 05-12-1985 |
| | | | US | 4763882 A | 16-08-1988 |
| US 2002190453 | A1 | 19-12-2002 | NONE | | |

EPO FORM P0459